(19) Europäisches Patentamt

European Patent Office

Office européen des brevets

(11) Veröffentlichungsnummer : **0 479 023 B1**

(12) **EUROPÄISCHE PATENTSCHRIFT**

(45) Veröffentlichungstag der Patentschrift :
03.08.94 Patentblatt 94/31

(21) Anmeldenummer : 91115662.8

(22) Anmeldetag : 16.09.91

(51) Int. Cl.⁵ : **G01D 5/245,** G01D 5/244

(54) **Verfahren und Vorrichtung zur Bildung von weg- bzw. winkelabhängigen Signalen, insbesondere für digitale Inkrementallagegeber.**

(30) Priorität : **29.09.90 DE 4030853**

(43) Veröffentlichungstag der Anmeldung :
**08.04.92 Patentblatt 92/15**

(45) Bekanntmachung des Hinweises auf die
Patenterteilung :
**03.08.94 Patentblatt 94/31**

(84) Benannte Vertragsstaaten :
**AT BE CH DE DK ES FR GB GR IT LI LU NL SE**

(56) Entgegenhaltungen :
**FR-A- 2 234 550**
**IBM TECHNICAL DISCLOSURE BULLETIN, Bd.
31, Nr. 10, März 1989, Armonk, NY, US, Seiten
206-208: "Encoder accuracy compensation
method"**

(73) Patentinhaber : **SIEMENS
AKTIENGESELLSCHAFT
Wittelsbacherplatz 2
D-80333 München (DE)**

(72) Erfinder : **Cuylen, Michael
Kantstrasse 69
W-8502 Zirndorf (DE)**

**Beschreibung**

Die Erfindung betrifft ein Verfahren zur direkten Bildung eines linearisierten, von der Phase zweier frequenzgleicher, möglichst sinus- oder cosinusförmiger Meßsignale abhängigen, dreieck- bzw. sägezahnförmigen Folgesignales mit dem Merkmal des Oberbegriffes von Anspruch 1. Die Erfindung betrifft ferner zwei Vorrichtungen zur Durchführung des Verfahrens und eine bevorzugte Verwendung derselben.

Ein die Merkmale des Oberbegriffes von Anspruch 1 bezüglich der Bildung eines dreieckförmigen Folgesignales aufweisendes Verfahren ist aus der DE 32 18 101 C2 ("Papiernik") bekannt. Dieses wird weiter unten noch näher beschrieben.

In der Meßtechnik treten vielfach sinus- bzw. cosinusförmige Meßsignale auf. Dabei ist es zur Weiterverarbeitung der Meßsignale häufig notwendig, aus diesen ein Folgesignal abzuleiten, welches ein möglichst genaues Abbild der aktuellen Phasenlage des Meßsignales darstellt. Das periodische, sinus- bzw. cosinusförmige Meßsignal wird somit in ein ebenfalls periodisches, möglichst lineares dreieck- oder sägezahnförmiges Folgesignal umgesetzt.

So werden z.B. bei der Messung von Wegen mittels berührungsloser Linearmeßeinrichtungen, von Winkeln mittels optischer Winkellagegeber bzw. von Geschwindigkeiten mittels ebenfalls optischer Drehgeschwindigkeitsgeber zumindest annähernd sinusförmige Meßsignale erzeugt, indem mit feinsten, inkrementellen Wegmarken versehene Geberlineale bzw. rotierende Geberscheiben bevorzugt optisch abgetastet werden. Zur Detektion der momentanen Position eines solchen Linearmaßstabes bzw. eines Winkellagegebers ist es notwendig, die zum aktuellen Wert eines sinusförmigen Meßsignales gehörige Phasenlage zu bestimmen, d.h. aus einem periodischen, sinusförmigen Meßsignal ein in der Regel ebenfalls periodisches, möglichst lineares dreieck- bzw. sägezahnförmiges Folgesignal zu bilden. Speziell bei Winkellagegebern wird hierzu beispielsweise eine mit inkrementellen Wegmarken versehene, rotierende Geberscheibe im sogenannten Auflicht- oder im Durchlichtverfahren abgetastet. Dabei werden zwei frequenzgleiche, möglichst ideale sinus- und cosinusförmige Meßsignale mit ebenfalls möglichst übereinstimmender Amplitude abgeleitet. Zu deren Umsetzung in annähernd linear von deren Phase abhängigen Folgesignale sind insbesondere bei digitalen Inkrementallagegebern bereits einige Schaltungen bekannt.

So werden bei der Schaltung in der DE 32 18 101 C2 ("Papiernik") die geradenähnlichen Bereiche in den Verläufen von sinus- und cosinusförmigen Geberrohsignalen, welche in etwa zwischen den normierten Signalwerten ± 0,707 liegen, ausgeblendet, und zu einem annähernd linear ansteigenden und abfallenden, näherungsweise dreieckförmigen Folgesignalverlauf zusammengestellt. Dabei werden praktisch die gekrümmten Kuppen der sinus- und cosinusförmigen Geberrohsignale ausgeblendet. Eine der somit erzeugbaren Formen von Folgesignalen läßt sich in etwa wie folgt darstellen:

$$M * (phi) = MIN (|sin(phi)|, |cos(phi)|) \quad (1)$$

mit $0° \leq phi \leq 360°$

M*: näherungsweise lineares Folgesignal

sin,cos: Geberrohsignale

Dennoch ist ein derartiges Folgesignal nicht ideal linear, sondern insbesondere im Bereich der Spitzen relativ stark gekrümmt. So wird in der DE 32 18 101 C2 zur Kompensation der Abweichung der als Segmente des Folgesignalverlaufes dienenden Sinus- und Cosinusausschnitte vom idealen, geradenförmigen Verlauf vorgeschlagen, ggf. ein nichtlineares Übertragungsglied vorzusehen, z.B. einen Analog-Digital-Wandler mit einer nichtlinearen Kennlinie.

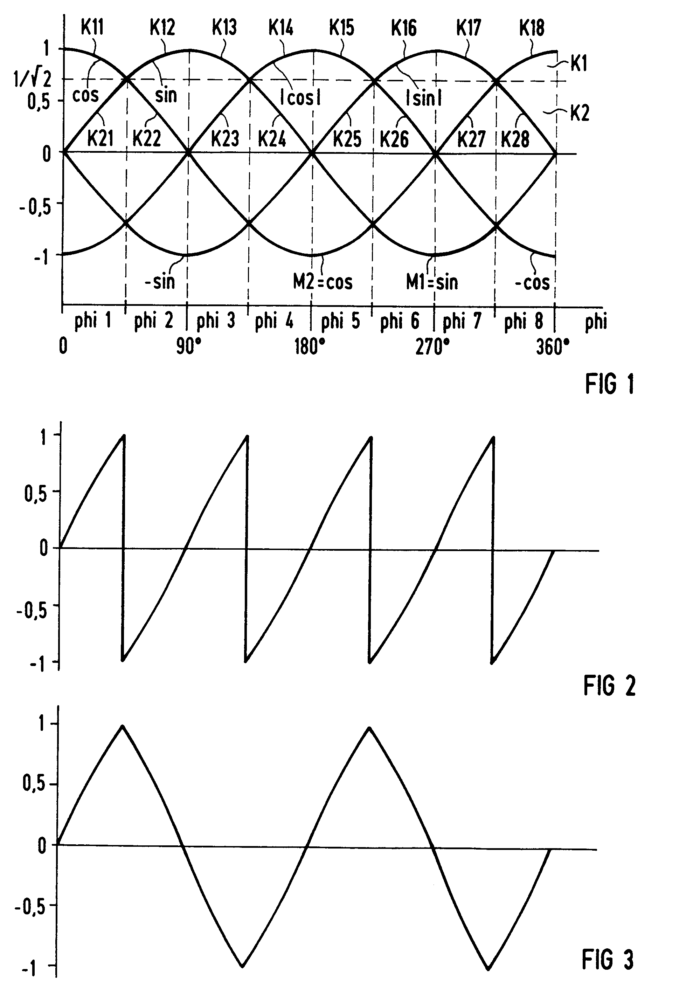

In den Figuren 2, 3 und 4 der vorliegenden Anmeldung sind beispielhaft derartige Folgesignalverläufe dargestellt, welche durch Zusammenstellung von möglichst geradenähnlichen Ausschnitten aus den in der Figur 1 dargestellten, sinus- und cosinusförmigen Meßsignalen gebildet sind. So zeigen die Figuren 2 bzw. 3 beispielhaft einen sägezahn- bzw. dreieckförmigen Folgesignalverlauf zwischen im normierten Signalbereich +1 und -1, und die Figur 3 beispielhaft einen dreieckförmigen Folgesignalverlauf im normierten Signalbereich 0 und +1. Dabei läßt sich der Folgesignalverlauf von Figur 3 durch die obige Gleichung (1) beschreiben, wenn diese zur Normierung der Spitzenwerte auf +1 zusätzlich mit $\sqrt{2}$ multipliziert wird. Bei allen Folgesignalverläufen in den Figuren 2, 3 und 4 sind deutlich die Krümmungen der Spitzen bei den Amplitudenwerten +1 bzw. -1 zu erkennen.

Aus der EP 0 325 981 Al ("Rupp") ist eine weitere Schaltung bekannt, welche als Folgesignalverlauf den Quotienten aus dem Betrag eines der beiden sinus- bzw. cosinusförmigen Meßsignale und der Summe der Beträge der beiden Meßsignale bildet, d.h. z.B.

$$M * (phi) = \frac{|A|}{|A| + |B|} = \frac{|sin(phi)|}{|sin(phi)| + |cos(phi)|}. \quad (2)$$

Dieser Zusammenhang stellt einen annähernd dreieckförmigen und zur Phase der sinus- bzw. cosinusförmigen Meßsignale näherungsweise linearen Folgesignalverlauf dar. Da dieser jedoch auch hier nicht ideal linear ist, wird ebenfalls vorgeschlagen Abweichungen vom idealen, geradenförmigen Verlauf ggf. durch eine geknickte Übertragungskennlinie des Analog-Digital-Wandlers zu kompensieren.

Schließlich ist aus der EP 0 390 936 A1 ("Donat") eine weitere Schaltung zur Erzeugung eines annähernd linearen Folgesignalverlaufes aus je einem sinus- und cosinusförmigen Meßsignal bekannt. Dieses wird gemäß der Beziehung

$$M^*(phi) = \frac{MIN(|A|,|B|)}{|A|+|B|} = \frac{MIN(|\sin(phi)|,|\cos(phi)|)}{|\sin(phi)|+|\cos(phi)|} \quad (3)$$

gebildet. Auch hier wird zur Anpassung möglicherweise störender Nichtlinearitäten im Folgesignalverlauf vorgeschlagen, diese durch eine entsprechend angepaßte Übertragungskennlinie eines der Umsetzer in der Schaltung zu kompensieren. Dabei soll insbesondere derjenige Umsetzer zur Kompensation angepaßt werden, welcher den Zähler der obigen Gleichung (3) bildet.

Die aus der DE 32 18 101 C2 ("Papiernik") bzw. der EP 0 325 981 Al ("Rupp") bekannten Schaltungen haben den Nachteil, daß entsprechend den in den obigen Gleichungen (1) bzw (2) dargestellten Beziehungen nur annähernd dreieck- bzw. sägezahnförmige Folgesignalverläufe aus den sinus- und cosinusförmigen Meßsignalen abgeleitet werden können. Werden hohe Anforderungen an die Genauigkeit der Linearität des Folgesignales gestellt, so müssen zusätzliche Maßnahmen ergriffen werden. Für solche Fälle wird jeweils vorgeschlagen, die Linearität der Folgesignale durch zusätzliche, nachgeschaltete Übertragungsglieder mit nichtlinearen Übertragungskennlinien zu verbessern. Die bekannten Schaltungen sind somit nicht in der Lage, unmittelbar stark linearisierte Folgesignale bereitzustellen. Vielmehr müssen zusätzliche Schaltungselemente vorgesehen und ertüchtigt werden. Hierdurch wird zum einen der Schaltungsaufwand erhöht, was insbesondere bei dem Bestreben, die äußeren Abmessungen von z.B. Winkellagegebern so klein als nur möglich zu halten, sehr nachteilig ist. Desweiteren ist es schwierig, eine an den Grad der jeweiligen Nichtlinearität eines Folgesignales optimal angepaßte, nichtlineare Übertragungsfunktion zu bilden. Diese kann letztlich nur durch Probieren gefunden werden. Ferner ist es aufwendig, ein zusätzliches, externes Übertragungsglied aufzubauen, welches die gefundene, nichtlineare Übertragungskennlinie möglichst unverändert wiedergibt. Schließlich ist es aufwendig, diese Übertragungskennlinie zum Zwecke von Feinstjustierungen im Einzelfall an individuelle Nichtlinearitäten in einzelnen Folgesignalverläufen anzupassen.

Ferner ist aus der DE OS 24 30 252 eine Linearisierungsschaltung bekannt. Hierbei werden digitale Eingangswerte einem Segmentumwandler zugeführt, welcher die Bereiche zwischen den digitalen Eingangswerten mit Geradenstücken füllt und hieraus eine polygonzugähnliche Kurve bildet. Mittels Umformungen, die auf der Grundlage von Geradengleichungen beruhen, werden die Eingangswerte so angepaßt, daß die digitalen Ausgangswerte auf einer Geraden liegen, und somit linearisiert sind.

Schließlich ist aus dem IBM Technical Disclosure Bulletin, Volume 31, Nr. 10, March 1989, Seiten 206 - 208 ein Verfahren zur Linearisierung von sinus- und cosinusförmigen Lagesigalen bekannt, welche von einem Lagegeber bereitgestellt werden. Das bekannte Vefahren dient zur Ableitung eines sägezahnförmigen Lagesignales aus den annähernd sinus- bzw. cosinusförmigen Ausgangssignalen A,B des Lagegebers. Wie aus dem unteren der beiden auf der Seite 206 dieses Dokumentes dargestellten Signalverläufen ersichtlich ist, soll dabei das linearisierte, sägezahnförmige Lagesignal im wesentlichen unter Zuhilfenahme der folgenden Beziehung gebildet werden:

$$\frac{MIN[|A|,|B|]}{MAX[|A|,|B|]} * SIGN[A*B]$$

Demgegenüber liegt der Erfindung die Aufgabe zugrunde, ein weiteres Verfahren und eine zu dessen Durchführung geeignete Vorrichtung anzugeben, womit ein möglichst lineares, dreieck- bzw. sägezahnförmiges Folgesignal aus frequenzgleichen, sinus- und cosinusförmigen Meßsignalen erzeugt werden kann. Insbesondere soll es auf einfache Weise möglich sein, direkt ein hochgradig linearisiertes Folgesignal ohne zusätzliche, nachgeschaltete Maßnahmen bereitzustellen.

Die Aufgabe wird gelöst mit dem im Anspruch 1 enthaltenen Verfahren und den zu dessen Durchführung geeigneten Vorrichtungen der Ansprüche 9 und 10. Vorteilhafte Ausführungen des Verfahrens und bevorzugte Verwendungen des Verfahrens und der Vorrichtungen sind in den abhängigen Ansprüchen enthalten. Das erfindungsgemäße Verfahren hat den Vorteil, daß in einfachster Weise lediglich durch Vorgabe zweier Faktoren unmittelbar die Bildung des linearisierten Folgesignales beeinflußt werden kann. So erfolgt die Eingriffnahme in die Folgesignalbildung ohne Zuhilfenahme von irgendwelchen externen, nachgeschalteten und ggf. künstlich geschaffenen Mitteln. Vielmehr werden zur erfindungsgemäßen direkten Bildung des linearisierten Folgesignales ausschließlich die beiden frequenzgleichen, sinus- und cosinusförmigen Meßsignale sowohl unmittelbar, als auch jeweils erfindungsgemäß mit den Faktoren bewertet herangezogen. Über die beiden Faktoren kann somit auf einfachste Weise in die Folgesignalbildung sowohl zur Erhöhung von deren Linearität, aber auch ggf. zum Aufprägen eines gezielt-nichtlinearen Verlaufes Einfluß genommen werden. Ein derartiger, bewußt vorgegebener nichtlinearer Verlauf des Folgesignales kann insbesondere dazu benutzt werden, bekannte, systeminterne Nichtlinearitäten in nachgeschalteten Elementen, z.B. in Analog-Digital-Wandlern, zu kompensieren.

Die erfindungsgemäße Vorrichtung zur Durchführung des erfindungsgemäßen Verfahrens inbesondere gemäß dem Anspruch 9 hat den Vorteil, daß die Vorgabe der beiden Faktoren zur Beeinflussung der Bildung des linearisierten Folgesignales auf besonders einfache Weise über einen einzigen Verstärker erfolgen kann, bei dem zwei Widerstände jeweils mit der Größe des Kehrwertes der beiden Faktoren am invertierenden Eingang vorgesehen werden. Die Schaltung hat den weiteren Vorteil, daß zur Quotientenbildung ein konventioneller, handelsüblicher AnalogDigital-Wandler verwendet werden kann. Da die Beeinflussung der Bildung der linearisierten Folgesignales erfindungsgemäß bereits vor dessen Eingängen durch entsprechende Auswahl von Widerständen eines Verstärkers erfolgt, ist es nicht notwendig, bei dem Wandler eine ggf. verstellbare, nichtlineare Eingangs- oder Übertragungskennlinie vorzusehen, bzw. dem Wandler ein separates Übertragungselement mit einer derartigen Kennlinie vorzuschalten. Die erfindungsmäße Schaltung besteht vielmehr aus einfachsten, handelsüblichen Bauelementen, an die keine besonderen Anforderungen gestellt werden müssen. Dies ist im Hinblick auf die äußerst beengten Platzverhältnisse im Inneren, z.B. von höchstintegrierten Winkellagegebern, besonders vorteilhaft.

Bevorzugte weitere Ausführungen der Erfindung und deren Vorteile werden desweiteren anhand der nachfolgend kurz angeführten Figuren näher erläutert. Dabei zeigt:

Figur 1      den Verlauf von ideal sinus- und cosinusförmigen Meßsignalen über den gesamten Phasenbereich, und dessen bevorzugte Einteilung in Teilphasenbereiche,

Figur 2 - 4      beispielhaft die Verläufe von näherungsweise sägezahn- bzw. dreieckförmigen Folgesignalen, welche durch Ausblenden von annähernd linearen Teilen der sinus- und cosinusförmigen Meßsignale gebildet werden,

Figur 5      den Verlauf einer Fehlerfunktion über den gesamten Phasenbereich, welche die Abweichung des gemäß der Erfindung gebildeten, linearisierten Folgesignales von einem geradenförmigen Idealverlauf darstellt, und

Figuren 6, 7      bevorzugte Ausführungsformen von Schaltungen zur Durchführung des erfindungsgemäßen Verfahrens.

In der Figur 1 sind beispielhaft ideal sinus- und cosinusförmige, auf den Wert 1 normierte Signalverläufe dargestellt, welche beispielsweise in Form von sogenannten Geberrohsignalen von Winkellagegebern bereitgestellt werden und als Eingangssignale zur erfindungsgemäßen direkten Bildung eines linearisierten, von deren Phase abhängigen dreieck- bzw. sägezahnförmigen Folgesignales dienen. Neben diesen Meßsignalen

$$M1(phi) = a.sin(phi)$$
$$M2(phi) = a.cos(phi) \hspace{4cm} (4)$$

mit $0 \leqq phi \leqq 360°$
a: Verstärkungsfaktor.

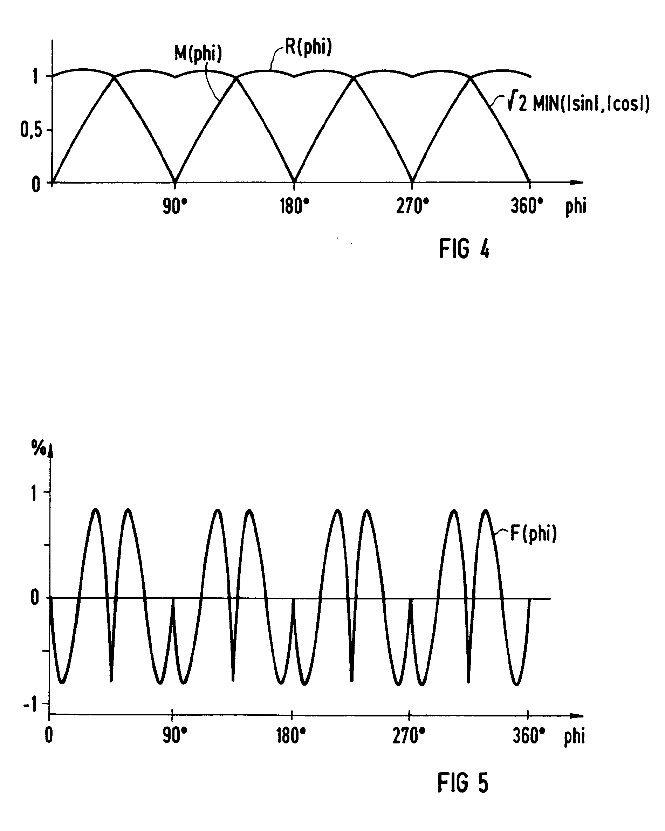

sind in Figur 1 auch die dazugehörigen Betragsfunktionen $|cos|$, $|sin|$ und die Funktionen mit umgekehrten Vorzeichen -cos, -sin dargestellt. Desweiteren ist der gesamte Phasenbereich von 0°...360° vorteilhaft in acht gleichgroße Teilphasenbereiche phi1...phi8 mit einer Breite von jeweils 45° unterteilt. Die in den bereits erläuterten, darunter befindlichen Figuren 2, 3 und 4 dargestellten sägezahn- und dreieckförmigen Folgesignalverläufen werden durch Auswahl möglichst linearer Ausschnitte aus den in der Figur 1 dargestellten Kurvenverläufen gebildet. So wird beispielsweise zur Bildung des sägezahnförmigen Folgesignalverlaufes von Figur 2 im ersten Teilphasenbereich phi1 die Funktion M1=sin und in den Teilphasenbereichen phi2, phi3 die Funktion $|M2| = |cos|$ herangezogen. In entsprechender Weise werden die in den Figuren 3 und 4 dargestellten Folgesignale abhängig von der jeweiligen Form, d.h. Sägezahn- oder Dreiecksform, und dem jeweiligen Signalbereich, d.h. -1...+1, 0...+1 oder -1...0, durch entsprechende Auswahl und Aneinanderreihung von möglichst linearen Ausschnitten aus den Meßsignalen bzw. aus deren Beträgen gebildet. So werden für das dreieckförmige Folgesignal von Figur 3, welches über einen Signalbereich von -1...+1 verfügt, z.B. in den ersten Teilphasenbereichen phi1 und phi2, phi3 die Ausschnitte aus den Meßsignalen M1=sin und M2=cos ausgewählt. In entsprechender Weise werden schließlich zur Bildung des ebenfalls dreieckförmigen, aber über einen Signalbereich 0...+1 verfügenden Folgesignales M(phi) gemäß der Figur 4 z.B. für die Teilphasenbereiche phi1, phi2, phi3 die Ausschnitte M1=sin, M2=cos, $|M2| = |cos|$ aus den Meßsignalen bzw. deren Beträgen in den entsprechenden Teilphasenbereichen herangezogen.

Erfindungsgemäß wird zur Bildung des linearisierten Folgesignales der Quotient aus dem jeweils ausgewählten Ausschnitt aus den Meßsignalen bzw. aus deren Beträgen und aus der Summe des mit einem ersten

4

Faktor bewerteten Maximalwert und des mit einem zweiten Faktor bewerteten Minimalwertes der Beträge der Meßsignale gebildet. In einer besonders vorteilhaften Ausführungsform der Erfindung werden die entsprechenden Ausschnitte aus den Meßsignalen teilphasenbereichsweise ausgewählt. In einem solchen Fall, welcher bei den Darstellungen in den Figuren 1 bis 4 bereits berücksichtigt wurde, ist der gesamte Phasenbereich von 0°...360° in möglichst gleich große Teilphasenbereiche phi1...phi8 aufgeteilt, welche bevorzugt eine Breite von 45° aufweisen. In diesem Fall wird pro Teilphasenbereich ein möglichst linearer Ausschnitt eines der Meßsignale bzw. von deren Beträgen ausgewählt und als Zählerfunktion in der erfindungsgemäßen Quotientenbildung verwendet.

Zur Vereinfachung soll die Erfindung desweiteren ausschließlich anhand des in Figur 4 dargestellten Signalverlaufes M(phi) näher erläutert werden. Die Erfindung ist aber ohne weiteres auch bei andersartigen Verläufen anwendbar, z.B. den in Figur 2 und 3 dargestellten. Die Zusammensetzung des Signalverlaufes M(phi) von Figur 4 aus teilphasenbereichsbezogenen Ausschnitten der Meßsignale bzw. von deren Beträgen läßt sich für jeden Teilphasenbereich wie folgt zusammenstellen:

```
phi1:    0°<phi< 45°,  M(phi1)=a.(sin(phi1))=M1(phi)
phi2:   45°<phi< 90°,  M(phi2)=a.(cos(phi2))=M2(phi)
phi3:   90°<phi<135°,  M(phi3)=a.(-cos(phi3))=-M2(phi)
phi4:  135°<phi<180°,  M(phi4)=a.(sin(phi4))=M1(phi)
phi5:  180°<phi<225°,  M(phi5)=a.(-sin(phi5))=-M1(phi)
phi6:  225°<phi<270°,  M(phi6)=a.(-cos(phi6))=-M2(phi)
phi7:  270°<phi<315°,  M(phi7)=a.(cos(phi7))=M2(phi)
phi8:  315°<phi<360°,  M(phi8)=a.(-sin(phi8))=-M1(phi).
```

```
                                             (Tabelle 1)
```

Exakt ergeben sich die Verläufe von Figur 4 durch Normierung der Ausschnitte für einen jeden Phasenbereich gemäß obiger Tabelle 1 auf den Wert 1, d.h. durch Multiplikation mit dem Faktors √2. Die Tabelle 1 kann ferner auch mit Hilfe der folgenden Beziehung zusammengefaßt werden:

$$M(phi) = \sqrt{2}.MIN(|M1(phi)|, |M2(phi)|) \quad (5)$$

mit $0 \leq phi \leq 360°$     √2: Normierungsfaktor.

Erfindungsgemäß wird nun zur Bildung des gewünschten linearisierten Folgesignales bevorzugt teilphasenbereichsbezogen der Quotient aus dem jeweils ausgewählten, möglichst linearen Ausschnitt aus einem der Meßsignale bzw. von deren Beträgen und aus der Summe des mit einem ersten Faktor bewerteten Maximalwertes und des mit einem zweiten Faktor bewerteten Minimalwertes der Beträge der Meßsignale gebildet. Ist der gesamte Phasenbereich von 0°...360° bevorzugt in 45° breite Teilphasenbereiche phi1...phi8 aufgeteilt, so läßt sich der Nenner des Quotienten pro Teilphasenbereich wie folgt tabellarisch zusammenstellen:

```
phi1:   R(phi1)=K1.a.(cos(phi1)+K2.a.(sin(phi1))
phi2:   R(phi2)=K1.a.(sin(phi2)+K2.a.(cos(phi2))
phi3:   R(phi3)=K1.a.(sin(phi3)+K2.a.(-cos(phi3))
phi4:   R(phi4)=K1.a.(-cos(phi4)+K2.a.(sin(phi4))
phi5:   R(phi5)=K1.a.(-cos(phi5)+K2.a.(-sin(phi5))
phi6:   R(phi6)=K1.a.(-sin(phi6)+K2.a.(-cos(phi6))
phi7:   R(phi7)=K1.a.(-sin(phi7)+K2.a.(cos(phi7))
phi8:   R(phi8)=K1.a.(cos(phi8)+K2.a.(-sin(phi8)).   (Tab.2)
```

Anschaulich gedeutet wird somit der Nenner des Quotienten dadurch gebildet, daß gemäß der Darstellung von Figur 1 im jeweiligen Teilphasenbereich dasjenige Meßsignal bzw. dessen Betrag mit K1 bewertet wird, welches einen Wert von größer 1/√2 aufweist, und dasjenige Meßsignal mit K2 bewertet wird, welches sich im gleichen Teilphasenbereich befindet und einen zwischen 0 und 1/√2 liegenden Wert aufweist. Am rechten Ende der Figur 1 ist dieser Zusammenhang dadurch verdeutlicht, daß der oberhalb von 1/√2 liegende Bereich mit K1 und der darunterliegende Bereich mit K2 markiert ist. So ergibt sich beispielsweise der Quotientennenner R im Teilphasenbereich phi8, d.h. R(phi8) als Summe aus dem mit K1 bewerteten Meßsignal M2=cos und dem mit K2 bewerteten Betrag |M1|=|sin|. Auch hier lassen sich die in Tabelle 2 zusammengestellten Zusammenhänge in Form einer mathematischen Beziehung wie folgt zusammenfassen:

$$R(phi) = K1.MAX(|M1(phi)|, |M2(phi)|) + K2.MIN(|M1(phi)|, |M2(phi)|)$$
$$\text{mit } 0 \leq phi \leq 360° \quad (6)$$

Die sich hiermit ergebende Nennerfunkion R(phi), welche gemäß der Tabelle 2 bevorzugt teilbereichsbezogen ist, ist in der Figur 4 bereits dargestellt. Aufgrund der dortigen, auf die jeweils 45° breiten Teilphasenbereiche phi1...phi8 bezogenen Darstellung ist in diesem Fall R(phi) eine 45°-periodische Funktion, welche auf jeder Teilphasenbereichsgrenze, d.h. bei 0°, 45°,90°,135°...360°, den Wert 1 und dazwischen Werte von geringfügig größer als 1 annimmt, wobei ein Maximum der Funktion der R(phi) jeweils in der Mitte eines jeden Teilphasenbereiches auftritt.

Erfindungsgemäß wird nun zur Bildung des gewünschten linearisierten Folgesignalverlaufes, bevorzugt getrennt für jeden Teilphasenbereich, der Quotient aus dem jeweils ausgewählten Ausschnitt aus den Meßsignalen bzw. von deren Beträgen und der Nennerfunktion R(phi) gemäß obiger Gleichung (6) gebildet. Dabei ist es im Prinzip unerheblich, ob die jeweils ausgewählten Ausschnitte, z.B. gemäß Figur 4, alle positiv sind und eine im Signalbereich 0...+1 liegende dreieckförmige Funktion M(phi) bilden, oder ob sie ggf. auch unterschiedliche Vorzeichen aufweisen und z.B. zu den sägezahn- bzw. dreieckförmigen Signalverläufen gemäß den Darstellungen von Figur 2 und 3 aneinandergereiht sind. Für das Beispiel der in Figur 4 dargestellten Funktion läßt sich unter Zuhilfenahme der obigen Gleichungen (5) und (6) der den gewünschten linearisierten Fol-gesignalverlauf LM(phi) repräsentierende Quotient wie folgt zusammenfassen:

$$LM(phi) = \frac{M(phi)}{R(phi)} = \frac{\sqrt{2} .MIN(|M1(phi)|, |M2(phi)|)}{K1.MAX(|M1(phi)|, |M2(phi)|) + K2.MIN(|M1(phi)|, |M2(phi)|)}$$
$$\text{mit } 0 \leq phi \leq 360° \quad (7)$$

Man erkennt, daß die erfindungsgemäße Folgesignalbildung unabhängig ist vom jeweils vorliegenden Verstärkungsfaktor a der sinus- bzw. cosinusförmigen Meßsignale R1(phi) und M2(phi), da der Verstärkungsfaktor a in den Funktionen M(phi) und R(phi) enthalten ist und sich somit im Quotienten LM(phi) herauskürzt.

Bevorzugt wird der erste und zweite Faktor K1, K2 so vorgegeben, daß eine die Abweichung des linearisierten Folgesignales LM(phi) von einem geradenförmigen Idealverlauf darstellende Fehlerfunktion F(phi) entweder im gesamten Phasenbereich von 0°...360° oder in einem der Teilphasenbereiche phi1...phi8 einen möglichst kleinen Spitzenwert aufweist. Ist der gesamte Phasenbereich wiederum in Teilphasenbereiche phi...phi8 aufgeteilt, so kann diese Fehlerfunktion getrennt für jeden Teilphasenbereich wie folgt tabellarisch zusammengestellt werden:

$$F(phi1) = LM(phi) - \frac{phi}{45°} \qquad 0° < phi < 45°$$

$$F(phi2) = LM(phi) - \frac{45° - (phi - 45°)}{45°} \qquad 45° < phi < 90°$$

$$F(phi3) = LM(phi) - \frac{phi - 90°}{45°} \qquad 90° < phi < 135°$$

$$F(phi4) = LM(phi) - \frac{45° - (phi - 135°)}{45°} \qquad 135° < phi < 180°$$

$$F(phi5) = LM(phi) - \frac{phi - 180°}{45°} \qquad 180° < phi < 225°$$

$$F(phi6) = LM(phi) - \frac{45° - (phi - 225°)}{45°} \qquad 225° < phi < 270°$$

$$F(phi7) = LM(phi) - \frac{phi - 270°}{45°} \qquad 270° < phi < 315°$$

$$F(phi8) = LM(phi) - \frac{45° - (phi - 315°)}{45°} \qquad 315° < phi < 360°$$

(Tab.3)

Bevorzugt werden somit der erste und zweite Faktor K1, K2 so bestimmt, daß die Fehlerfunktion in jedem Teilphasenbereich einen möglichst kleinen Spitzenwert hat, d.h.

$$K1, K2 : F(phix) = MIN$$
$$mit \ 1 \leq x \leq 8 \quad (8)$$

Es zeigt sich, daß unter der Annahme von ideal sinus- und cosinusförmigen Meßsignalverläufen M1(phi), M2(phi) im gesamten Phasenbereich von 0°...360° die Fehlerfunktion F eine im Prinzip mit der Weite der Teilphasenbereiche periodische, d.h. bevorzugt in 45° periodische Funktion darstellt, welche ferner einen für jeden Teilphasenbereich identischen Spitzenwert aufweist. In diesem Fall ist es somit ausreichend, unabhängig von der Unterteilung in Teilphasenbereiche für den ersten Summanden des Nenners der obigen Gleichung (7) einen für den gesamten Phasenbereich gültigen Wert für den Faktor K1 und entsprechend einen ebenfalls für den gesamten Phasenbereich gültigen Faktor K2 für den zweiten Summanden vorzusehen.

In der Praxis können zur Bestimmung der Werte von K1 und K2 Iterationsverfahren herangezogen werden. Dabei wird der Verlauf der Fehlerfunktion F(phi) beispielsweise für einen ausgewählten Teilphasenbereich, z.B. die Funktion F(phi1) im Teilphasenbereich phi1, zyklisch durchgerechnet. Als Ausgangspunkt der Iteration werden im Quotienten LM(phi) die Faktoren K1 und K2 mit Startwerten belegt. Daraufhin wird die zu diesen Werten K1, K2 gehörige Fehlerfunktion F(phi1) ermittelt und der jeweilige Spitzenwert bestimmt. Nun wird versuchsweise der Wert einer der beiden Faktoren verändert. Ergibt eine erneute Durchrechnung der Fehlerfunktion F einen kleineren Spitzenwert, so wird die Veränderung von K1 solange fortgesetzt, bis keine Verringerung des Spitzenwertes der Fehlerfunktion mehr erreicht werden kann. Nun wird unter Beibehaltung des als optimal gefundenen Wertes von K1 versucht, durch sukzessive iterative Vergrößerung bzw. Verkleinerung des Wertes des zweiten Faktors K2 noch kleinere Spitzenwerte der Fehlerfunktion zu finden. Ist nach sukzessiver Veränderung des Wertes von K2 ein Punkt erreicht, an dem der Spitzenwert nicht weiter verkleinert werden kann, so wird dies durch erneute Variation des Wertes von K1 um den ursprünglich als optimal herausgefundenen Wert versucht. Kann hierdurch der Spitzenwert der Fehlerfunktion erneut reduziert werden, so wird am Ende der Variation von K1 beim neuerlichen Spitzenwertminimum wiederum auf den aktuellen Wert von K2 umgeschaltet, und durch weitere Variation desselben versucht, den Spitzenwert weiter zu reduzieren. Es zeigt sich, daß derartige beispielhafte Iterationsverfahren zur Bestimmung von K1, K2 konvergieren und stabile, immer feiner werdende Werte für die beiden Faktoren K1, K2 erzeugen.

Wird z.B. ein derartiges Iterationsverfahren zur Bestimmung von K1 und K2 auf die Gleichungen (6) bzw. (7) angewendet und angenommen, daß die dortigen Meßsignalverläufe M1(phi) und M2(phi) gemäß der obigen Gleichung (4) ideal sinus- und cosinusförmig sind, so können die folgenden Werte gefunden werden:

```
K1 = 1,014318...
K2 = 0,388382...                    (Tabelle 4)
```

Es ist dabei unerheblich, ob zur Iteration eine der Fehlerfunktionen F(phix) gemäß der obigen Tabelle 3 im dazugehörigen Teilphasenbereich phix herangezogen wird, oder ob die Iteration über den gesamten Phasenbereich von 0°...360° erstreckt wird. In diesem Fall weist die Fehlerfunktion F(phi) in jedem Teilphasenbereich den gleichen Spitzenwert auf, so daß sich unverändert jeweils das in der obigen Tabelle 4 niedergelegte Wertepaar für K1, K2 einstellt. Die zu diesem Sonderfall gehörige Fehlerfunktion ist in der Figur 5 dargestellt. Man erkennt, daß sie symmetrisch zum Nullpunkt ist und im Prinzip in jedem Teilphasenbereich phi1...phi8 über den gleichen, jedoch abwechselnd gespiegelten Kurvenverlauf verfügt. Unter Zugrundelegung des in der obigen Tabelle 4 niedergelegten Wertepaares für K1, K2 verfügt die Fehlerfunktion von Figur 5 in jedem Teilphasenbereich über einen Spitzenwert von ± 0,83 %. Dies ist die maximale Abweichung, d.h. der Linearitätsfehler, eines erfindungsgemäß unter Zuhilfenahme der Gleichung (7) und der Tabelle 4 gebildeten linearisierten Folgesignales vom idealen geradenförmigen Verlauf. Mit einem derartig kleinen Linearitätsfehler des linearisierten Folgesignales ist es möglich, die jeweilige Phase der Meßsignale mit einer maximalen Abweichung von

$$\frac{0,83}{100} \cdot \frac{360°}{8} = 0,3735°$$

genau zu bestimmen. Dieser maximale Winkelfehler ist ca. um den Faktor 10 kleiner als der bei Verwendung der in der obengenannten EP 0 325 981 Al angegebenen Schaltung erreichbare Fehler von ± 3,86°. Schließlich ist der Fehler noch um ca. den Faktor 5 kleiner als der dort angegebene Fehlerwert von ± 1,6°, welcher sich unter Verwendung einer geknickten Übertragungskennlinie zur Kompensation der Nichtlinearitäten ergibt.

Gemäß einer weiteren Ausführungsform der Erfindung kann das linearisierte Folgesignal auch getrennt für einen jeden Teil phi1...phi8 des gesamten Phasenbereiches gebildet werden. Hierbei wird dann als Nennerfunktion im erfindungsgemäßen Quotienten im jeweiligen Phasenbereich die Summe aus dem mit einem teilphasenbereichsspezifischen ersten Faktor bewerteten Maximalwert und dem mit einem teilphasenbereichsspezifischen zweiten Faktor bewerteten Minimalwert aus den Beträgen der Meßsignale gebildet. Für jeden Teilphasenbereich wird somit ein eigenes Wertepaar aus je einem teilphasenbereichsspezifischen ersten und zweiten Faktor zugeordnet. So gehört zum ersten Teilphasenbereich phi1 das Wertepaar K11, K21, für den zweiten Teilphasenbereich phi2 das Wertepaar K12, K22, usw.. Die sich hierdurch ergebenden, teilphasenbereichsspezifischen Nennerfunktionen R(phix) für den erfindungsgemäßen Quotienten LM(phi) sind nachfolgend tabellarisch zusammengefaßt:

```
phi1:  R(phi1)=K11.a.(cos(phi1))+K21.a.(sin(phi1))

phi2:  R(phi2)=K12.a.(sin(phi2))+K22.a.(cos(phi2))

phi3:  R(phi3)=K13.a.(sin(phi3))+K23.a.(-cos(phi3))

phi4:  R(phi4)=K14.a.(-cos(phi4))+K24.a.(sin(phi4))

phi5:  R(phi5)=K15.a.(-cos(phi5))+K25.a.(-sin(phi5))

phi6:  R(phi6)=K16.a.(-sin(phi6))+K26.a.(-cos(phi6))

phi7:  R(phi7)=K17.a.(-sin(phi7))+K27.a.(cos(phi7))

phi8:  R(phi8)=K18.a.(cos(phi8))+K28.a.(-sin(phi8)).
```

```
(Tabelle 5)
```

Bevorzugt wird auch hier der erste und zweite teilphasensspezifische Faktor K11, K21 bzw. K12, K22 bzw. ... für den jeweiligen Teilphasenbereich phi1, phi2, phi3, ... so eingestellt, daß wiederum eine die Abweichung des linearisierten Folgesignales LM(phi) von einem geradenförmigen Idealverlauf darstellende Fehlerfunktion F(phix) im betroffenen Teilphasenbereich einen möglichst kleinen Spitzenwert hat. In diesem Fall werden also für jeden Teilphasenbereich phi1...phi8 bevorzugt unter Verwendung eines Iterationsverfahrens die jeweils optimalen Werte der teilphasenbereichsspezifischen ersten und zweiten Faktoren K1x bzw. K2x mit $1 \leqq x \leqq 8$ separat bestimmt. Ein derartiges, für jeden Teilphasenbereich getrennt optimiertes, linearisiertes Folgesignal läßt sich unter Zuhilfenahme der in obiger Tabelle 5 dargestellten Nennerfunktionen wie folgt darstellen:

$$LM(phi) = \frac{M(phi)}{R(phix)} \quad (9)$$

mit

$1 \leqq x \leqq 8$

$0° \leqq phi \leqq 360°.$

Eine derartige, teilphasenbereichsspezifische Bildung des linearisierten Folgesignales ist insbesondere dann von Vorteil, wenn die Meßsignale M1(phi), M2(phi) nicht ideal sinus- bzw. cosinusförmig sind. Dies kann z.B. dann, wenn die Meßsignale von Winkellagegebern mit rotierenden Geberscheiben bereitgestellt werden, seine Ursache darin haben, daß die Geberscheibe nicht exakt rechtwinkelig zur Achse gelagert ist und einen Höhenschlag aufweist, oder exzentrisch gelagert ist und einen sog. Radialschlag aufweist.

Da in diesem Fall die bevorzugt mit inkrementalen Wegmarken belegte Geberscheibe mit einem endlichen Abstand an darunterliegenden Abtastelementen mit Gitterstrukturen vorbeiläuft, treten bei einer optischen Durchleuchtung der Geberscheibe Beugungserscheinungen zwischen Geberscheibe und darunterliegendem Gitter auf. Auch derartige optische Einflüsse können bei den Meßsignalen eine Abweichung vom idealen sinus- und cosinusförmigen Verlauf verursachen. Schließlich kann auch herstellungsbedingt der Abstand der inkrementellen Wegmarken auf der Geberscheibenoberfläche variieren, d.h., daß das sogenannte Schlitz/Steg-Verhältnis im gesamten Phasenbereich nicht konstant 1 ist. In einem solchen Fall ist es vorteilhaft, erfindungsgemäß die Fehlerfunktion getrennt in jedem Teilbereich phi1...phi8 zu optimieren und das dazugehörige optimale Wertepaar für den ersten und zweiten teilphasenbereichsspezifischen Faktor K11, K21 bzw. K12, K22 bzw. ... zu ermitteln. Mit einer derartigen, teilphasennereichsspezifischen Bildung des erfindungsgemäßen linearisierten Folgesignales ist es möglich, die obengenannten mechanischen und optischen Beeinträchtigungen der idealen Sinus- und Cosinusform der Meßsignale im gesamten Phasenbereich weitgehend auszugleichen.

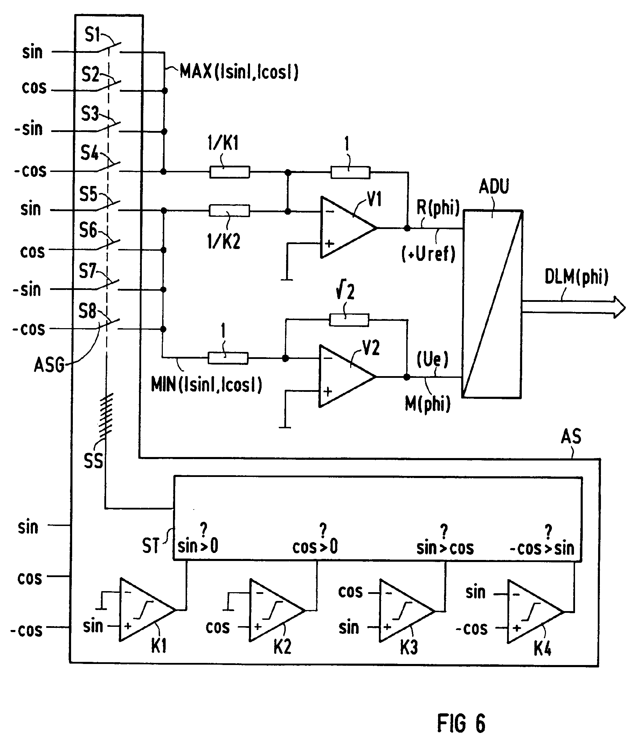

In Figur 6 ist eine vorteilhafte Ausführungsform einer zur Durchführung des erfindungsgemäßen Verfahrens geeigneten Vorrichtung unter Zugrundelegung der Verläufe von Figur 4 dargestellt. Diese enthält eine Auswahllogik AS, welche den Minimal- und Maximalwert aus den Beträgen der Meßsignale bildet. Hierzu wird bevorzugt unter Zuhilfenahme einer aus acht Schaltern S1...S8 bestehenden Analogschaltergruppe ASG gerade dasjenige Meßsignal bzw. der dazugehörige Betrag durchgeschaltet, welches im jeweiligen Teilphasenbereich die gewünschte Minimal- bzw. Maximalbedingung erfüllt. So werden den Schaltern S1...S4 bzw. S5...S8 jeweils die Signale sin, cos, -sin und -cos zugeführt. Bevorzugt eine zusätzliche Schaltersteuerung ST in der Auswahllogik AS stellt dabei die Schaltersteuersignale SS für die Schalter S1...S8 zur Verfügung. Am Eingang der Schaltersteuerung ST befinden sich dabei bevorzugt vier Komparatoren K1...K4, welche ständig anzeigen, welches der Meßsignale M1 = sin und M2 = cos größer 0 ist, bzw. welches der Meßsignale größer als das andere ist. Hiermit kann für jeden der Teilphasenbereiche phi1...phi8 durch Aktivierung je eines Schalters aus der Schaltergruppe S1...S4 und S5...S8 das jeweils richtige Signal am Eingang von AS ausgewählt werden.

Zur Bildung des erfindungsgemäßen, linearisierten Folgesignales LM(phi) z.B. gemäß der obigen Gleichung (7), werden der jeweilige Minimal- und Maximalwert aus den Beträgen der Meßsignale am Ausgang der Auswahllogik AS zum einen einem Verstärker V1 zugeführt. Dieser bewertet den Maximalwert mit dem ersten Faktor K1 und den Minimalwert mit dem zweiten Faktor K2. Die Vorgabe der beiden Faktoren erfolgt in bekannter Weise durch Auswahl von parallel geschalteten Eingangswiderständen am invertierenden Eingang des Verstärkers V1, welche jeweils den Wert 1/K1 und 1/K2 haben. Am Ausgang des Verstärkers V1 steht somit die Summe R(phi) entsprchend der obigen Gleichung (6) an. Diese Summe wird einem Analog-Digital-Umsetzer ADU bevorzugt an einem Referenzeingang +Uref zugeführt. Ferner wird dem Umsetzer ADU der Minimalwert MIN aus den Beträgen der Meßsignale M1, M2 an einem weiteren Signaleingang Ue zugeführt. Gemäß einer weiteren, in der Figur 6 bereits dargestellten Ausführungsform der Erfindung wird der Minimalwert aus den Beträgen der Meßsignale vor Zuführung an den Signaleingang Ue zur Normierung der Extremwerte auf den Wert 1 bevorzugt über einen zweiten Verstärker V2 geführt. Dieser bewertet den Minimalwert MIN mit dem Faktor $\sqrt{2}$, so daß am Ausgang des Verstärkers V2 die Funktion M(phi) gemäß der obigen Gleichung (5) entsteht.

Der Analog-Digital-Umsetzer ADU bildet nun intern den Quotienten aus den am Signaleingang Ue und am Referenzeingang +Uref anliegenden Funktionen. An dessen Ausgang entsteht das linearisierte Folgesignal LM(phi) gemäß der obigen Gleichung (7) in digitalisierter Form, d.h. das binäre Wort DLM(phi). Die erfindungsgemäße Vorrichtung hat somit den Vorteil, daß unter Verwendung von handelsüblichen Bauelementen das hochgenaue, linearisierte Folgesignal LM auf einfachste Weise bereitgestellt werden kann.

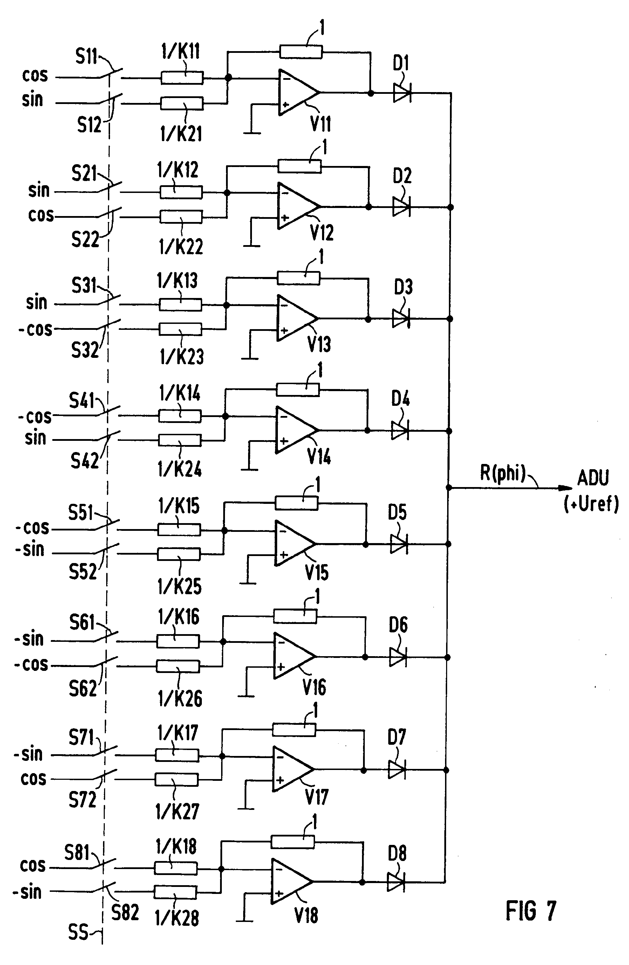

Mit Hilfe der schließlich in Figur 7 dargestellten Vorrichtung kann das linearisierte Folgesignal LM entsprechend der Darstellung in obiger Tabelle 5 bzw. Gleichung (9) getrennt für einen jeden Teil phi1...phi8 des gesamten Phasenbereiches gebildet werden. Bei der Schaltung von Figur 7 ist wiederum davon ausgegangen, daß der gesamte Phasenbereich von 0°...360° in acht Teilphasenbereiche phi1...phi8 aufgeteilt ist, welche jeweils eine Breite von 45° aufweisen. Dementsprechend ist für einen jeden Teilphasenbereich phi1...phi8 ein separater Summenverstärker vorgesehen. Diese bewerten die für den jeweiligen Teilphasenbereich auszuwählenden Meßsignale bzw. deren Betrage gemäß der Tabelle (5) mit dem jeweiligen teilphasenbereichsspezifischen ersten und zweiten Faktor, d.h. mit K11 und K21 beim Verstärker V11, mit K12 und K22 beim Verstärker V12 usw., und bilden hieraus jeweils die Summe. Die Ausgänge der Verstärker V11...V18 können über nachgeschaltete Dioden D1...D8 zur Nennerfunktion R(phix) zusammengefaßt werden. Auch hier wird der jeweilige teilbereichsspezifische Verstärker V11...V18 dadurch aktiviert, daß diesem gesteuert über vorgeschaltete Schaltelemente S11, S12, S21, S22...S81,S82 dann die entsprechenden Meßsignale bzw. deren Beträge zugeführt werden, wenn das linearisierte Folgesignal im jeweiligen Teilbereich zu bilden ist. So sind den Bewertungswiderständen 1/K11 und 1/K21 bei V11, 1/K12 und 1/K22 bei V12 usw. Steuerschalter S11, S12 und S21, S22 usw. aus einer Analogschaltergruppe ASG vorgeschaltet. Diese werden von Steuersignalen SS betätigt, welche von einer Schaltersteuerungslogik gebildet werden, welche im Prinzip mit der in der Figur 6 dargestellten Schaltersteuerung ST übereinstimmt. Gegebenenfalls können die Schaltelemente in der Schaltung von Figur 7 auch vollständig entfallen, da die Dioden D1...D8 auch selbständig die Signale der Verstärker V11...V18 zusammenfassen können. Schließlich wird das durch die Dioden D1...D8 zusammengefaßte Signal R(phix) ebenfalls entsprechende Darstellung von Figur 6 dem Analog-Digital-Umsetzer ADU an einem Referenzeingang +Uref als Nenner der Funktion der obigen Gleichung (9) zugeführt.

## Patentansprüche

1. Verfahren zur direkten Bildung eines linearisierten, von der Phase (phi) zweier frequenzgleicher, möglichst sinus- und cosinusförmiger Meßsignale (M1 (phi), M2 (phi)) abhängigen, dreieck- bzw. sägezahnförmigen Folgesignales (LM(phi)), wobei

a) entsprechend der jeweiligen Form und dem Signalbereich (-1...+1, 0...+1, -1...0) des linearisierten Folgesignales (Fig.2,3,4) für dessen Bildung möglichst lineare Ausschnitte aus den Meßsignalen (M1=sin, M2=cos) bzw. aus deren Beträgen ($|$M1$|$, $|$M2$|$) ausgewählt werden,
dadurch gekennzeichnet, daß

b) das linearisierten Folgesignal dem Quotienten aus dem jeweiligen Ausschnitt der Meßsignale und aus der Summe des mit dem ersten Faktor (K1;K11...K18) bewerteten Maximalwertes ($\mathrm{MAX}(|$M1(phi)$|,|$M2(phi)$|)$) und des mit einem zweiten Faktor (K2; K21...K28) bewerteten Minimalwertes ($\mathrm{MIN}(|$M1(phi)$|,|$M2(phi)$|$) der Beträge der Meßsignale (M1,M2) entspricht.

2. Verfahren nach Anspruch 1, dadurch gekennzeichnet, daß der gesamte Phasenbereich (0°...360°) in Teilphasenbereiche (phi1...phi8) aufgeteilt ist, welche bevorzugt eine Breite von 45° aufweisen, und pro Teilphasenbereich ein möglichst linearer Ausschnitt eines der Meßsignale bzw. von deren Beträgen ausgewählt wird.

3. Verfahren nach Anspruch 1 oder 2, dadurch gekennzeichnet, daß der Quotient aus dem Minimalwert (M(phi)=MIN) der Beträge der Meßsignale ($\mathrm{MIN}(|$sin$|,|$cos$|$), Tabelle 2) und aus der Summe (R(phi)) des mit einem ersten Faktor (K1) bewerteten Maximalwertes ($\mathrm{K1.MAX}(|$sin$|,|$cos$|$) und des mit einem zweiten Faktor (K2) bewerteten Minimalwertes ($\mathrm{K2.MIN}(|$sin$|,|$cos$|$) der Beträge der Meßsignale ($|$M1$|$, $|$M2$|$) gebildet wird.

4. Verfahren nach einem der vorangegangenen Ansprüche, dadurch gekennzeichnet, daß der erste und zweite Faktor (K1, K2) so eingestellt werden, daß eine die Abweichung des linearisierten Folgesignales (LM(phi)) von einem geradenförmigen Idealverlauf ($\frac{\text{phi}}{45°}$) darstellende Fehlerfunktion (F(phi)) im gesamten Phasenbereich (0°...360°) bzw. in einem Teil (phi1...phi8) desselben, welcher bevorzugt eine Breite von 45° aufweist, einen möglichst kleinen Spitzenwert hat.

5. Verfahren nach einem der vorangegangenen Ansprüche, dadurch gekennzeichnet, daß unter der Annahme von ideal sinus- und cosinusförmigen Meßsignalen (M1(phi), M2(phi)) im gesamten Phasenbereich (0°...360°), der erste Faktor (K1) einen Wert von 1,014318... und der zweite Faktor (K2) einen Wert von 0,388382... aufweist (Tabelle 4).

6. Verfahren nach Anspruch 1 oder 2, **dadurch gekennzeichnet,** daß das linearisierte Folgesignal (LM(phi)) getrennt für einen jeden Teil (phi1...phi8) des gesamten Phasenbereiches (0°...360°) gebildet wird, wobei jeder Teilphasenbereich (phi1...phi8) bevorzugt eine Breite von 45° aufweist, indem jeweils die Summe (R(phix) mit $1 \leq x \leq 8$) aus dem mit einem teilphasenbereichsspezifischen ersten Faktor (K11...K18) bewerteten Maximalwert (MAX) und dem mit einem teilphasenbereichsspezifischen zweiten Faktor (K21...K28) bewerteten Minimalwert (MIN) aus den Beträgen ($|\sin|$, $|\cos|$) der Meßsignale (M1, M2) gebildet wird.

7. Verfahren nach Anspruch 6, **dadurch gekennzeichnet,** daß der erste und zweite teilphasenbereichsspezifische Faktor (K11, K12 bzw. K21, K22 bzw. ...) für den jeweiligen Teilphasenbereich (phi1, phi2, ...) so eingestellt werden, daß eine die Abweichung des linearisierten Folgesignales (LM(phi)) von einem geradenförmigen Idealverlauf ($\frac{phi}{45°}$) darstellende Fehlerfunktion (F(phi), Tabelle 3) im betroffenen Teilphasenbereich (phi1, phi2, ...) einen möglichst kleinen Spitzenwert hat.

8. Verwendung eines gemäß dem Verfahren nach einem der vorangegangenen Ansprüche gebildeten linearisierten Folgesignales (LM(phi)) für eine Weg- oder Winkellagemessung.

9. Vorrichtung zur Durchführung des Verfahrens nach einem der Ansprüche 1 bis 5, mit
a) einer Auswahllogik (AS; ST, SS, ASG), welche den Minimal- und Maximalwert (MIN, MAX) aus den Beträgen ($|\sin|$, $|\cos|$) der Meßsignale (M1, M2) bildet,
b) einem Verstärker (V1), welcher die Summe aus dem mit dem ersten Faktor (K1) bewerteten Maximalwert (MAX) und dem mit dem zweiten Faktor (K2) bewerteten Minimalwert (MIN) aus den Beträgen der Meßsignale bildet, und
c) einem Analog-Digital-Umsetzer (ADU), dem der Minimalwert aus den Beträgen der Meßsignale (MIN($|\sin|$,$|\cos|$)) an einem Signaleingang (Ue) und das Verstärkerausgangssignal (K1.MAX($|M1|$,$|M2|$) + K2.MIN($|M1|$,$|M2|$)) an einem Referenzeingang (+Uref) zugeführt werden, und der durch interne Quotientenbildung der beiden Eingangssignale das lineare Folgesignal (LM(phi)) in digitalisierter Form (DLM(phi)) bildet.

10. Vorrichtung zur Durchführung des Verfahrens nach einem der Ansprüche 1, 2, 6 oder 7, mit
a) einer Auswahllogik (AS; ST, SS, ASG), welche den Minimal-und Maximalwert (MIN, MAX) aus den Beträgen ($|\sin|$, $|\cos|$) der Meßsignale (M1, M2) bildet,
b) einer den Teilen (phi1...phi8) des gesamten Phasenbereiches (0°...360°) entsprechenden Anzahl an Verstärkern (V11...V18), welche für den jeweils zugeordneten Teilphasenbereich (phi1...phi8) die Summe aus dem mit dem ersten, teilphasenbereichsspezifischen Faktor (K11...K18) bewerteten Maximalwert (MAX) und dem mit dem zweiten teilphasenbereichsspezifischen Faktor (K21...K28) bewerteten Minimalwert (MIN) aus den Beträgen ($|\sin|$, $|\cos|$) der Meßsignale (M1, M2) bilden, und
c) einem Analog-Digital-Umsetzer (ADU), dem der Minimalwert aus den Beträgen der Meßsignale (MIN($|\sin|$,$|\cos|$) an einem Signaleingang (Ue) und das Ausgangssignal des zum jeweiligen Teilphasenbereich (phi1...phi8) gehörigen Verstärkers (V11...V18) an einem Referenzeingang (+Uref) zugeführt werden, und der durch interne Quotientenbildung der beiden Eingangssignale das linearisierte Folgesignal (LM(phi)) getrennt für jeden Teilphasenbereich (phi1...phi8) in digitalisierter Form bildet.

11. Verwendung einer Vorrichtung nach einem der Ansprüche 9 oder 10 in einem Inkrementalgeber zur Weg- oder Winkellageerfassung.

**Claims**

1. Process for the direct generation of a linearized triangular or sawtooth signal train (LM(phi)) that is a function of the phase (phi) of two measuring signals (M1 (phi), M2 (phi)) having equal frequencies and, as far as possible, sine or cosine waveforms, whereby
a) as near as possible linear sections are selected from the measuring signals (M1=sin, M2=cos) or from their absolute values ($|M1|$, $|M2|$) according to the respective form and the signal range (-1 to +1, 0 to +1, -1 to 0) of the linearized signal train (Figs, 2, 3, 4), for its generation, characterised in that

b) the linearized signal train corresponds to the quotient of the respective section of the measuring signals and of the sum of the maximum value (MAX($|$M1 (phi)$|$, $|$M2 (phi)$|$) weighted with th first factor (K1; K11 to K18) and the minimum value (MIN($|$M1(phi)$|$,$|$M2(phi)$|$) of the absolute values of the measuring signals (M1, M2), weighted with a second factor (K2; K21 to K28).

2. Process according to Claim 1, characterised in that the entire phase range (0° to 360°) is divided into partial phase ranges (phi 1 to phi 8), which preferably have a span of 45°, and from one of the measuring signals or from its absolute values a section that is as far as possible linear is selected per partial phase range.

3. Process according to Claim 1 or 2, characterised in that the quotient is generated from the minimum value (M(phi) =MIN) of the absolute values of the measuring signals (MIN($|$sin$|$,$|$cos$|$), Table 2) and from the sum (R(phi)) of the maximum value (K1.MAX($|$sin$|$,$|$cos$|$) weighted with a first factor (K1) and the minimum value (K2.MIN($|$sin$|$,$|$cos$|$) of the absolute values of the measuring signals ($|$M1$|$,$|$M2$|$) weighted with a second factor (K2).

4. Process according to one of the preceding Claims, characterised in that the first and second factors (K1, K2) are determined so that an error function (F(phi)) representing the deviation of the linearized signal train (LM (phi)) from an ideal straight-line waveform (phi/45°) has a smallest possible peak value in the entire phase range (0° to 360°) or in a part (phi 1 to phi 8) of the said phase range, which preferably has a span of 45°.

5. Process according to one of the preceding Claims, characterised in that, assuming ideal sine and cosine measuring signal waveforms Ml(phi), M2 (phi) over the entire phase range (0° to 360°), the first factor (K1) has a value of 1.014318 and the second factor (K2) has a value of 0.388382 (Table 4).

6. Process according to Claim 1 or 2, characterised in that the linearized signal train (LM (phi)) is generated separately for each part (phi 1 to phi 8) of the entire phase range (0° to 360°), whereby each partial phase range (phi 1 to phi 8) preferably has a span of 45°, in each case the sum (R(phix)) of $1 \leqq x \leqq 8$ being generated from the maximum value (MAX) weighted with a partial phase range-specific first factor (K11 to K18) and the minimum value (MIN) of the absolute values ($|$sin$|$,$|$cos$|$) of the measuring signals (M1, M2), weighted with a partial phase range-specific second factor (K21 to K28).

7. Process according to Claim 6, characterised in that the first and second partial phase range-specific factors (K11, K12 or K21, K22......) are determined for the respective partial phase range (phi 1, phi 2, ...) so that an error function (F(phi), Table 3) representing a deviation of the linearized signal train (LM(phi)) from an ideal straight-line waveform (phi/45°) has a smallest possible peak value in the relevant partial phase range (phi 1, phi 2...).

8. Use of a linearized signal train (LM(phi)) generated in accordance with the process according to one of the preceding Claims, for a displacement measurement or an angular position measurement.

9. Device for implementing the process according to one of the Claims 1 to 5, with
   a) a sampling logic unit (AS; ST, SS, ASG) which generates the minimum and maximum value (MIN, MAX) from the absolute values ($|$sin$|$,$|$cos$|$) of the measuring signals (M1, M2),
   b) an amplifier (V1) which generates the sum of the maximum value (MAX) weighted with the first factor (K1) and the minimum value (MIN) of the absolute values of the measuring signals, weighted with the second factor (K2), and
   c) an analogue/digital converter (ADU) to which the minimum value of the absolute values of the measuring signals (MIN($|$sin$|$,$|$cos$|$)) is fed via a signal input (Ue) and the amplifier output signal (K1.MAX($|$M1$|$,$|$M2$|$) + K2.MIN($|$M1$|$M2$|$)) is fed to a reference input (+Uref), the said analogue/digital converter (ADU) producing the linear signal train (LM(phi)) in digitized form (DLM(phi)) by generating the quotient of the two input signals internally.

10. Device for implementing the process according to one of the Claims 1, 2, 6 or 7, with
   a) a sampling logic unit (AS; ST, SS, ASG) which generates the minimum and maximum value (MIN, MAX) from the absolute values ($|$sin$|$,$|$cos$|$) of the measuring signals (M1, M2),
   b) a number of amplifiers (V11 to V18) corresponding to the parts (phi 1 to phi 8) of the entire phase range (0° to 360°), which generate the sum of the maximum value (MAX) weighted with the first, partial phase range-specific factor (K11 to K18) and the minimum value (MIN) of the absolute values ($|\sin|$, $|\cos|$) of the measuring signals (M1, M2), weighted with the second, partial phase range-specific factor (K21 to K28), and

c) an analogue/digital converter (ADU) to which the minimum value of the absolute values of the measuring signals (MIN($|\sin|$, $|\cos|$)) is fed via a signal input (Ue) and the output signal of the amplifier (V11 to V18) associated with the respective partial phase range (phi 1 to phi 8) is fed to a reference input (+Uref), the said analogue/digital converter (ADU) producing the linearized signal train (LM(phi)) in digitized form separately for each partial phase range (phi 1 to phi 8) by generating the quotient of the two input signals internally.

**11.** Use of a device according to one of the Claims 9 or 10, in an incremental encoder for displacement or angular position detection.

## Revendications

**1.** Procédé pour former directement un signal linéarisé de séquence (LM(phi)) de forme triangulaire ou en dents de scie, qui dépend de la phase (phi) de deux signaux de mesure (M1(phi), M2(phi)) possédant la même fréquence et autant que possible en forme de sinus et de cosinus, selon lequel,

a) en fonction de la forme respective et de la gamme ou plage (-1... +1, 0... +1, -1...0) du signal linéarisé de séquence (figures 2, 3, 4), pour la formation de ce signal, on sélectionne des parties aussi linéaires que possible des signaux de mesure (M1=sin, M2=cos ) ou de leurs valeurs absolues ($|$M1$|$, [M2$|$),

caractérisé par le fait que

b) le signal linéarisé de séquence correspond au quotient de la partie des signaux de mesure par la somme de la valeur maximale (MAX($|$M1(phi)$|$, $|$M2(phi)$|$)) pondérée par le premier facteur (K1; K11...K18) et de la valeur minimale (MIN($|$M1(phi)$|$, $|$M2(phi)$|$)) pondérée par un second facteur (K2; K21...K28), des valeurs absolues des signaux de mesure (M1,M2).

**2.** Procédé suivant la revendication 1, caractérisé par le fait que l'ensemble de la gamme des phases (0°...360°) est subdivisé en des gammes de phases partielles (phi1...phi8), qui possèdent de préférence une largeur de 45°, et pour chaque gamme de phases partielles, une partie aussi linéaire que possible de l'un des signaux de mesure ou de leurs valeurs absolues est sélectionnée.

**3.** Procédé suivant la revendication 1 ou 2, caractérisé par le fait que le quotient est formé par la valeur minimale (M (phi) =MIN) des valeurs absolues des signaux de mesure ((MIN($|\sin|$, $|\cos|$), tableau 2) par la somme (R(phi)) de la valeur maximale (K1.MAX($|\sin|$), $|\cos|$)), pondérée par un premier facteur (K1) et par la valeur minimale (K2.MIN($|\sin|$, $|\cos|$)) pondérée par un second facteur (K2) des valeurs absolues des signaux de mesure ($|$M1$|$, $|$M2$|$).

**4.** Procédé suivant l'une des revendications précédentes, caractérisé par le fait qu'une fonction d'erreur (F(phi)), qui représente l'écart du signal linéarisé de séquence (LM(phi)) par rapport à une allure idéale rectiligne ($\frac{phi}{45°}$) possède, dans l'ensemble de la gamme des phases (0°...360°) ou dans une partie (phi1...phi8) de cette gamme, qui possède de préférence une largeur de 45°, une valeur maximale aussi faible que possible.

**5.** Procédé suivant l'une des revendications précédentes, caractérisé par le fait que dans l'hypothèse de signaux de mesure (Ml(phi), M2(phi)) idéalement en forme de sinus et de cosinus, dans la gamme totale des phases (0°...360°), le premier facteur (K1) possède une valeur égale à 1,014318... et le second facteur (K2) possède une valeur égale à 0,388382... (tableau 4).

**6.** Procédé suivant la revendication 1 ou 2, caractérisé par le fait que le signal linéarisé de séquence (LM(phi)) est formé séparément pour chaque partie (phi1...phi8) de l'ensemble de la gamme des phases (0°...360°), auquel cas chaque gamme de phases partielles (phi1...phi8) possède de préférence une largeur de 45°, par le fait que respectivement la somme (R(phix) avec $1 \leqq x \leqq 8$) de la valeur maximale (MAX) pondérée par un premier facteur (K11..K18), spécifique à la gamme des phases partielles, de la valeur minimale (MIN) pondérée avec un second facteur (K21...K28) spécifique à la gamme des phases partielles, est formée à partir des valeurs absolues ($|\sin|$, $|\cos|$) des signaux de mesure (M1, M2).

7. Procédé suivant la revendication 6, caractérisé par le fait que les premier et second facteurs (K11, K12 ou K21, K22 ou ...), qui sont spécifiques à la gamme des phases partielles, sont réglés pour la gamme respective des phases partielles (phi1, phi2, ...) de telle sorte qu'une fonction d'erreur (F(phi), tableau 3), qui représente l'écart du signal linéarisé de séquence (LM(phi)) par rapport à l'allure idéale rectiligne ($\frac{phi}{45°}$) possède, dans la gamme considérée des phases partielles (phi1, phi2, ...), une valeur maximale aussi faible que possible.

8. Utilisation d'un signal linéarisé de séquence (LM(phi)), formé conformément au procédé selon l'une des revendications précédentes, pour une mesure de distance ou de position angulaire.

9. Dispositif pour la mise en oeuvre du procédé suivant l'une des revendications 1 à 5, comportant
   a) une logique de sélection (AS; ST, SS, ASG), qui forme la valeur minimale et la valeur minimale (MIN, MAX) à partir des valeurs absolues ($|sin|$, $|cos|$) des signaux de mesure (M1, M2),
   b) un amplificateur (V1), qui forme la somme de la valeur maximale (MAX) pondérée par le premier facteur (K1) et de la valeur minimale (MIN) pondérée par le second facteur (K2), à partir des valeurs absolues des signaux de mesure, et
   c) un convertisseur analogique/numérique (ADU), à l'entrée des signaux (Ue) duquel est envoyée la valeur minimale formée à partir des valeurs absolues des signaux de mesure (MIN($|sin|$, $|cos|$)) et à une entrée de référence (Uaef) duquel est envoyé le signal de sortie de l'amplificateur (K1.MAX($|M1|$, $|M2|$ + K2.MIN($|M1|$, $|M2|$)), et qui forme le signal linéaire de séquence (LM(phi)) sous forme numérisée (DLM(phi)), au moyen de la formation interne du quotient des deux signaux d'entrée.

10. Dispositif pour la mise en oeuvre du procédé suivant la revendication 1, 2, 6 ou 7, comportant
    a) une logique de sélection (AS; ST, SS, ASG), qui forme la valeur minimale et la valeur minimale (MIN, MAX) à partir des valeurs absolues ($|sin|$, $|cos|$) des signaux de mesure (M1, M2),
    b) un nombre, qui correspond aux parties (phi1...phi8) de l'ensemble de la gamme des phases (0°...360°), d'amplificateurs (V11...V18), qui, pour la gamme respectivement associée des phases partielles (phi1...phi8), forment la somme de la valeur maximale (MAX) pondérée par le premier facteur (K11...K18) spécifique à la gamme des phases partielles, et de la valeur minimale (MIN) pondérée par le second facteur (K21...K28) spécifique à la gamme des phases partielles, à partir des valeurs absolues ($|sin|$, $|cos|$) du signal de mesure (M1, M2), et
    c) un convertisseur analogique/numérique (ADU), à une entrée des signaux (Ue) duquel est envoyée la valeur minimale formée à partir des valeurs absolues des signaux de mesure (MIN($|sin|$, $|cos|$)) et à une entrée de référence (+Uref) duquel est envoyé le signal de sortie de l'amplificateur (V11...V18) qui est associé à la gamme respective de phases partielles (phi1...phi8), et qui forme, sous forme numérisée, le signal linéarisé de séquence (LM(phi)) séparément pour chaque gamme de phases partielles (phi1...phi8), au moyen de la formation interne du quotient des deux signaux d'entrée.

11. Utilisation d'un dispositif suivant l'une des revendications 9 ou 10, dans un générateur incrémental pour la détection d'un trajet ou d'une position angulaire.

FIG 1

FIG 2

FIG 3

FIG 4

FIG 5

FIG 6

FIG 7